# EUROPEAN PATENT APPLICATION

(11) **EP 4 361 994 A2**
(43) Date of publication of application: **01.05.2024**
(21) Application number: 23206016.0
(22) Date of filing: 26.10.2023
(51) Int. Cl.: G08G 1/0967, G08G 1/16, H04W 4/46, H04W 12/63, H04W 12/65, H04W 4/44

(54) **INFORMATION PROCESSING METHOD AND INFORMATION PROCESSING APPARATUS**

(30) Priority: 28.10.2022 JP 2022173825
(71) Applicant: TOYOTA JIDOSHA KABUSHIKI KAISHA, Toyota-shi, Aichi-ken, 471-8571 (JP)
(72) Inventor: SHAO, Xiao, TOYOTA-SHI, AICHI-KEN, 471-8571 (JP); SAKAI, Takurou, SHINJUKU-KU, TOKYO, 163-8003 (JP)
(74) Representative: Cabinet Beau de Loménie

(57) **Abstract**

An information processing method includes, by an information processing apparatus: receiving first information relating to a second vehicle acquired using a sensor from a first in-vehicle terminal installed in a first vehicle; specifying communication identification information on the second vehicle based on the first information and second information indicating a characteristic of a surrounding vehicle present around the first vehicle; and sending the communication identification information to the in-vehicle terminal.

## Description

### BACKGROUND

### 1. Technical Field

The present disclosure relates to an information processing method and an information processing apparatus.

### 2. Description of the Related Art

Conventionally, there have been technologies to notify surrounding vehicles of information on a position and a predicted traveling course of a host vehicle through vehicle-to-vehicle communication so as to identify a risky vehicle (see, for example, Japanese Patent Application Laid-open No. 2008-90663).

Further, there have been technologies to match video of a video camera with data of a motion sensor to identify a person (see, for example, U.S. Patent Application Publication No. 2015/0085111). Further, there have been technologies to collect information on an adjacent sensor at all times to ascertain position information on each sensor in a wireless sensor network (see, for example, U.S. Patent No. 9351124) .

### SUMMARY

The present disclosure has an object of providing an information processing method and an information processing apparatus for suitably obtaining information to perform vehicle-to-vehicle communication.

An aspect of the present disclosure provides an information processing method including, by an information processing apparatus: receiving first information relating to a second vehicle acquired using a sensor from a first in-vehicle terminal installed in a first vehicle; specifying communication identification information on the second vehicle based on the first information and second information indicating a characteristic of a surrounding vehicle present around the first vehicle; and sending the communication identification information to the in-vehicle terminal.

Further, an aspect of the present disclosure provides an information processing apparatus including a controller that executes: receiving first information relating to a second vehicle acquired by using a sensor from a first in-vehicle terminal installed in a first vehicle; specifying communication identification information on the second vehicle based on the first information and second information indicating a characteristic of a surrounding vehicle present around the first vehicle; and sending the communication identification information to the in-vehicle terminal.

Further, an aspect of the present disclosure provides an information processing method including executing by a first in-vehicle terminal installed in a first vehicle: sending first information relating to a second vehicle acquired by using a sensor; and when receiving communication identification information on the second vehicle from an information processing apparatus that has received the first information, communicating with a second in-vehicle terminal installed in the second vehicle using communication identification information.

An aspect of the present disclosure may include at least one of an information processing apparatus, an information processing system, a program, and a recording medium on which the program is recorded, each of which has the same characteristics as those of the information processing method.

According to the present disclosure, it is possible to suitably obtain information for performing vehicle-to-vehicle communication.

### BRIEF DESCRIPTION OF THE DRAWINGS

FIG. 1 is a diagram illustrating a configuration example of an information processing system according to an embodiment;
FIG. 2 illustrates an example of vehicle-to-vehicle communication assumed using the information processing system;
FIG. 3A is a diagram illustrating a configuration example of a server device operable as a first server (sensing function) or a second server (external server);
FIG. 3B is a diagram illustrating a configuration example of an in-vehicle terminal;
FIG. 4 is a flowchart illustrating a processing example in the first server (sensing function);
FIG. 5 is a flowchart illustrating a processing example in the second server (external server); and
FIG. 6 is a flowchart illustrating a processing example in a first vehicle (vehicle A).

### DESCRIPTION OF THE EMBODIMENTS

An information processing method according to an embodiment includes:
receiving, by an information processing apparatus, first information relating to a second vehicle acquired using a sensor from a first in-vehicle terminal installed in a first vehicle;
specifying, by the information processing apparatus, communication identification information on the second vehicle based on the first information and second information illustrating a characteristic of a surrounding vehicle present around the first vehicle; and
sending, by the information processing apparatus, the communication identification information to the in-vehicle terminal.

The second information may include position information on the surrounding vehicle. The second information may include information on at least one of a shape, a type, a color, and matters written on a license plate of the surrounding vehicle.

Further, when receiving the first information, the information processing apparatus may use the sensor installed in the first vehicle. Further, when receiving the first information, the information processing apparatus may use a sensor provided in a transportation infrastructure used by the first vehicle.

Further, when specifying the communication identification information on the second vehicle, the information processing apparatus may be based on the first information, the second information, and third information acquired by a base station.

Further, the communication identification information on the second vehicle may be used by the first in-vehicle terminal to communicate with a second in-vehicle terminal installed in the second vehicle.

Further, an information processing method according to the embodiment includes: sending, by a first in-vehicle terminal installed in a first vehicle, first information relating to a second vehicle acquired using a sensor; and communicating, by the first in-vehicle terminal, with a second in-vehicle terminal installed in the second vehicle using communication identification information when receiving the communication identification information on the second vehicle from an information processing apparatus receiving the first information.

The information processing method may further include: specifying, by the first in-vehicle terminal, the second vehicle based on information indicating a surrounding area of the first vehicle. Further, the first in-vehicle terminal may adjust an operation planned by the first vehicle through communication with the second in-vehicle terminal. Further, when adjusting the operation, the first in-vehicle terminal may adjust at least one of a timing at which the first vehicle performs the operation and a traveling speed of the first vehicle.

The first in-vehicle terminal may suspend or interrupt automatic driving assistance with respect to the first vehicle when not receiving the communication identification information. Further, the first in-vehicle terminal may decrease an automatic driving assistance level with respect to the first vehicle when not receiving the communication identification information.

Hereinafter, an information processing apparatus according to an embodiment will be described with reference to the drawings. The configuration of the embodiment is given only as an example, and the information processing apparatus is not limited to the configuration of the embodiment.

### Configuration of Information Processing System

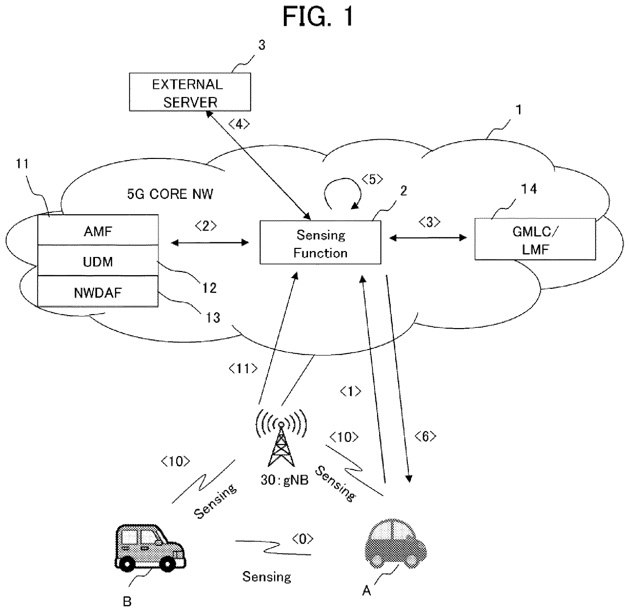

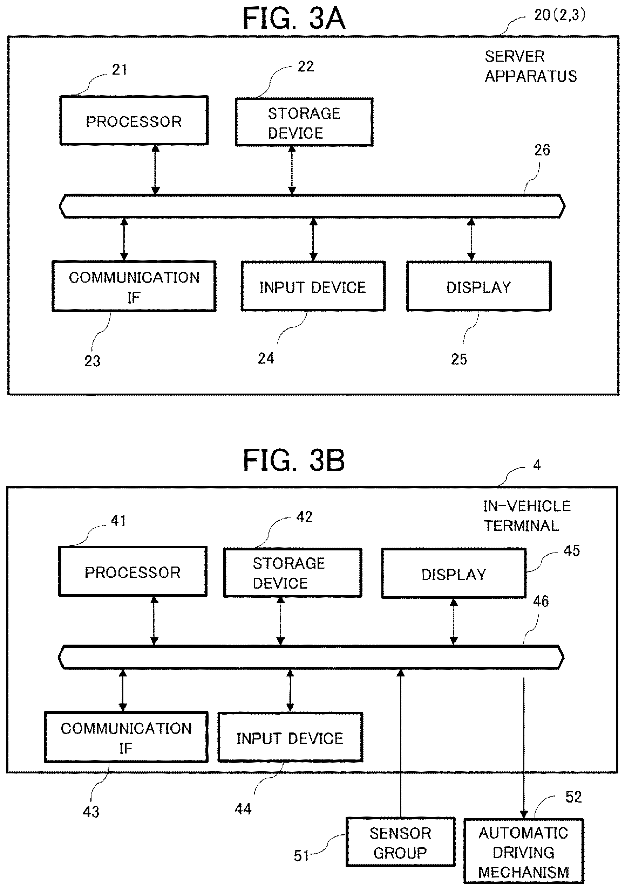

FIG. 1 illustrates an example of an information processing system according to the embodiment. In FIG. 1, the information processing system includes a network 1, a base station 30 connected to the network 1, and in-vehicle terminals 4 (FIG. 3A and FIG. 3B) communicable with the base station 30. Further, an external server 3 is connected to the network 1.

The network 1 is, for example, a 5G cellular network (5G network: 5GC). However, the network 1 may be a network other than the 5GC, for example, a public communication network such as the Internet, a wide area network (WAN), or other communication networks. The network 1 may include a wireless network (wireless path) such as a wireless LAN (Local Area Network including Wi-Fi) and BLE.

A vehicle A is an example of a "first vehicle" and is an automatic driving vehicle. However, the vehicle A may be a vehicle capable of being driven by a person. A vehicle B is an example of a vehicle (called a surrounding vehicle) present around the vehicle A. The surrounding vehicle is, for example, a vehicle present within a prescribed distance from the center of the vehicle A. Each of the vehicle A and the vehicle B has the in-vehicle terminal 4 (FIG. 3B), and the in-vehicle terminal 4 is communicable with the network 1 via the base station 30 (gNB).

The network 1 serving as the 5GC includes, as entities present in the 5GC, an access and mobility management function (AMF) 11, a unified data management (UDM) 12, a network data analytic function (NWDAF) 13, and a gateway mobile location centre (GMLC) and location management function (LMF) 14.

The AMF 11 is an in-zone accommodation device of user equipment (UE: terminal) in the 5GC. The NWDAF 13 has the function of collecting and analyzing data from respective NFs and operation, administration and management (OAMs). The UDM 12 provides subscriber information, or acquires, registers, deletes, and changes the status of the UE. The GMLC is a gateway node that acquires the latitude and longitude of a mobile terminal in any positioning system, and exchanges information on the acquired latitude and longitude with the outside. The LMF is a function (NF) responsible for communication and control relating to a position information service stipulated in the 5GC. The GMLC/LMF 14 may include any one of the GMLC and the LMF.

In addition, the network 1 includes a sensing function (SF) 2. The SF 2 receives sensing information (sensing data: an example of first information) relating to the vehicle B from the vehicle A. The SF 2 has the function of analyzing the shape, the distance, or the speed of a target object from the sensing information (the sensing information indicates the receiving results of various sensors (such as a wireless receiver, a Radar, a Lidar, and a camera)). The SF 2 exchanges information with the AMF 11, the UDM 12, the NWDAF 13, and the GMLC/LMF 14 corresponding to the sensing information or the external server 3 (an example of a second server) connected to the network 1, and determines communication ID information (an example of communication identification information) on the vehicle B that is a communication target. The communication ID information may include, for example, a subscription permanent identifier (SUPI), an IP address, and a MAC address. However, the communication ID information is not limited to the above information so long as the vehicle A is enabled to communicate with the vehicle B by the acquisition of the communication ID information. The SF 2 may be mounted as a new NF or a part of an existing NF such as the GMLC/LMF 14.

Each of the AMF 11, the UDM 12, the NWDAF 13, the GMLC/LMF 14, and the SF 2 is a function realized when one or two or more computers (information processing apparatuss) run a program.

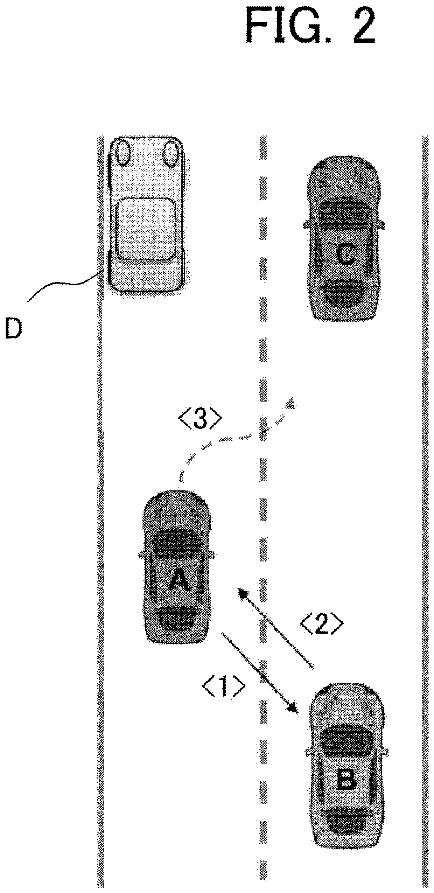

FIG. 2 illustrates an example (use case) in which the vehicle-to-vehicle communication between the vehicle A and the vehicle B (the communication between the in-vehicle terminal 4 (called an in-vehicle terminal 4A) of the vehicle A and the in-vehicle terminal 4 (called an in-vehicle terminal 4B) of the vehicle B) is performed during the automatic driving of the vehicle A. The in-vehicle terminals 4 are called agents. It is assumed that a vehicle D shown as a parked vehicle is found in a lane in which the vehicle A is traveling. The vehicle A makes an attempt to temporarily projectingly travel in a right lane and pass the vehicle D.

At this time, the in-vehicle terminal 4A of the vehicle A sends the notification of a lane change request to the in-vehicle terminal 4B of the vehicle B (<1> in FIG. 2). The in-vehicle terminal 4B having received the notification confirms whether the vehicle A is permitted to change the lane, and then sends the notification of a reply (for example, permission) to the in-vehicle terminal 4A (<2> in FIG. 2). The in-vehicle terminal 4A having received the notification performs control so that the vehicle A changes the lane, while confirming the reply from the vehicle B and the deceleration of the vehicle B (<3> in FIG. 2).

The above vehicle-to-vehicle communication is enabled when a communication ID relating to the vehicle B is known to the vehicle A (in-vehicle terminal 4A). The vehicle A has a sensor group 51 (FIG. 3B) including at least one of a radar, a LiDAR, a camera, and the like, and is capable of detecting the vehicle B traveling on the rear side of the change destination lane from sensing information acquired by the sensor group 51. However, the above vehicle-to-vehicle communication is not enabled when the communication ID relating to the vehicle B is not known to the vehicle A. A communication system according to the embodiment solves the above problem and performs suitable vehicle-to-vehicle communication to achieve suitable automatic driving. Note that the in-vehicle terminal 4 may receive sensing data obtained by one or two or more sensors provided in a transportation infrastructure used by the vehicle A (where the vehicle A travels) such as a road and a tunnel instead of the sensor group 51 and send the received data to the SF 2.

### Configuration of Server

FIG. 3A is a diagram illustrating a configuration example of a server machine (server device) 20. The server device 20 is an example of an "information processing apparatus." The server device 20 is configurable using a dedicated or general-purpose information processing apparatus (computer) such as a personal computer (PC), a workstation (WS), and a server machine. Above all, the server device 20 may be an aggregate (cloud) of one or two or more computers. By running a program, the server device 20 is enabled to operate as each of the AMF 11, the UDM 12, the NWDAF 13, the GMLC/LMF 14, the SF 2, and the external server 3.

The server device 20 is communicable with the in-vehicle terminals 4 via the base station 30 through its communicating function. The server device 20 may be connected to the network 1 in a wired or wireless fashion. The server device 20 may be a stationary terminal or a mobile terminal.

The server device 20 includes a processor 21 serving as a processing unit or a control unit (controller), a storage device 22, a communication interface 23 (communication IF 23), an input device 24, and a display 25, all of which are connected to one another via a bus 26.

The storage device 22 includes a main storage device and an auxiliary storage device. The main storage device is used as at least one of a program and data storage area, a program development area, a program work area, a communication data buffer area, and the like. The main storage device is configured by a random access memory (RAM) or a combination of a RAM and a read-only memory (ROM). The auxiliary storage device is used as a data and program storage area. A non-volatile memory storage medium is applied as the auxiliary storage device. The non-volatile storage medium is, for example, a hard disk, a solid-state drive (SSD), a flash memory, an electrically-erasable programmable read-only memory (EEPROM), or the like. Further, the storage device 22 may include a drive device for a disk recording medium.

The communication IF 23 is a circuit that performs communication processing. The communication IF 23 is, for example, a network interface card (NIC). Further, the communication IF 23 may be a wireless communication circuit that performs wireless communication (such as 5G, wireless LAN (Wi-Fi), and BLE). Further, the communication IF 23 may be a combination of a circuit that performs wired communication processing and a wireless communication circuit.

The input device 24 includes a key, a button, a pointing device, a touch panel, or the like, and is used to input information. The display 25 is, for example, a liquid-crystal display or the like, and displays information and data.

The processor 21 runs various programs stored in the storage device 22 to perform various processing. For example, the processor 21 is operable as each of the AMF 11, the UDM 12, the NWDAF 13, the GMLC/LMF 14, the SF 2, and the external server 3.

FIG. 3B is a diagram illustrating a configuration example of the in-vehicle terminal 4 included in a vehicle. The in-vehicle terminal 4 may be one installed in a vehicle or a mobile terminal placed inside a vehicle. The in-vehicle terminal 4 includes a processor 41, a storage device 42, a communication interface 43 (communication IF 43), an input device 44, and a display 45, all of which are connected to one another via a bus 46. The processor 41, the storage device 42, the communication IF 43, the input device 44, and the display 45 may be the same as the processor 21, the storage device 22, the communication IF 23, the input device 24, and the display 25, respectively. Therefore, the descriptions of these constituents will be omitted.

The in-vehicle terminal 4 acquires sensing information (sensing data) from the sensor group 51 provided in a vehicle (for example, the vehicle A). The sensor group 51 may include, for example, at least one of a wireless receiver, a radar, a LiDAR, and a camera. The sensing information indicates, for example, the sensing results (the intensity of reflected waves) of a radar and a LiDAR and the electric-field intensity of radio waves from the base station 30 received by a wireless receiver. Further, the sensing information may represent an image (including a moving image (video)) captured by a camera. The in-vehicle terminal 4 is capable of assisting automatic driving including a lane change by giving a control signal to an automatic driving mechanism provided in the vehicle A. Further, the in-vehicle terminal 4 is capable of increasing and decreasing an automatic driving level according to the propriety of communication.

The processors 21 and 41 are, for example, central processing units (CPUs). The CPUs are also called microprocessor units (MPUs). The processor 21 may have a single processor configuration or a multi-processor configuration. Further, a single physical CPU connected through a single socket may have a multi-core configuration. The processors 21 and 41 may include computation devices having various circuit configurations such as a digital signal processor (DSP) and a graphics processing unit (GPU). Further, the processors 21 and 41 may have a configuration to cooperate with at least one of an integrated circuit (IC), other digital circuits, an analog circuit, and the like. The IC includes an LSI, an application-specific integrated circuit (ASIC), a programmable logic device (PLD), or the like. The PLD includes, for example, a field-programmable gate array (FPGA). The processors 21 and 41 also include, for example, one called a microcontroller (MCU), a system-on-a-chip (SoC), a system LSI, a chip set, or the like.

### Processing Example

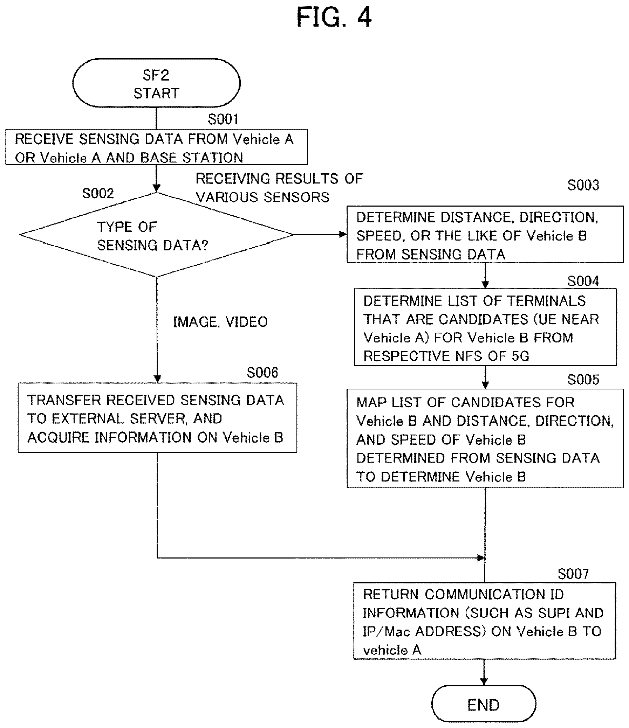

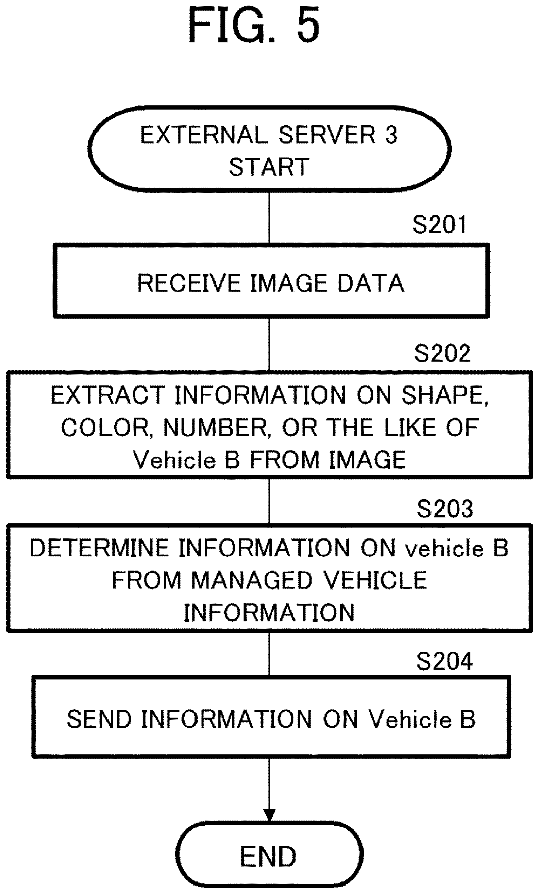

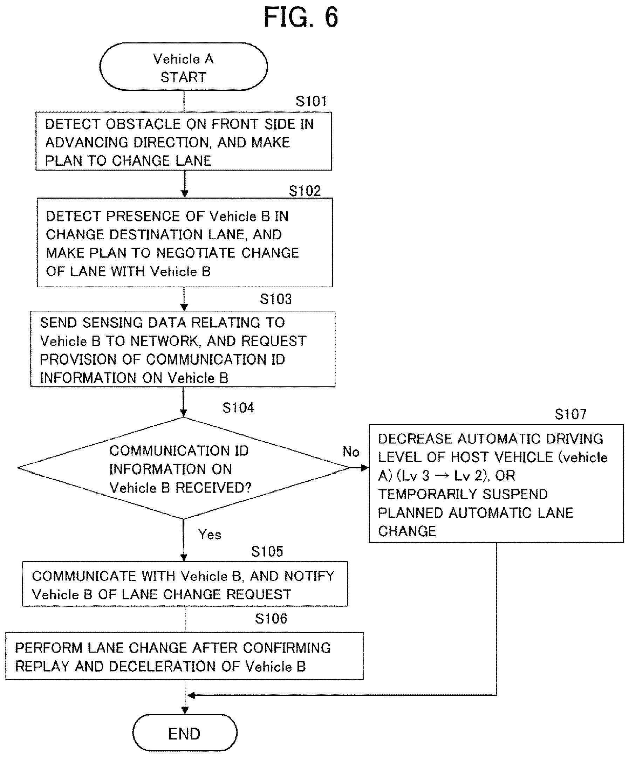

FIG. 4 is a flowchart illustrating a processing example in the SF 2 (first server). FIG. 5 is a flowchart illustrating a processing example in the external server 3 (second server). FIG. 6 is a flowchart illustrating a processing example in the vehicle A (in-vehicle terminal 4A). Processing shown in FIG. 4, FIG. 5, and FIG. 6 is performed when the processor 21 of the server device 20 (first server) operating as the SF 2 or the processor 41 of the in-vehicle terminal 4 runs a program.

In step S001 of FIG. 4, the processor 21 of the server device 20 operating as the SF 2 receives sensing data from the vehicle A or the vehicle A and the base station 30 (see <1> in FIG. 1). The sensing data is data indicating the electric-field intensity of radio waves from the base station 30 and the intensity of reflected waves of a radar and a LiDAR. The sensing data is acquirable using at least one of the sensor group 51, a sensor group provided in a transportation infrastructure, and a sensor provided in the base station 30. The sensing data acquired by the base station 30 is an example of "third information."

In step S002, the processor 21 determines the type of the sensing data. When the type of the sensing data indicates the receiving results of various sensors (the electric-field intensity of radio waves or the intensity of reflected waves of a radar or a LiDAR), the processing proceeds to step S003. When the type of the sensing data indicates an image (including video), the processing proceeds to step S006.

In step S003, the processor 21 determines the distance, the direction, the speed, or the like of the vehicle B from the sensing data.

In step S004, the processor 21 maps the distance, the direction, and the speed of the vehicle B determined from the sensing data with respect to a list of candidates for the vehicle B to determine the vehicle B. Here, as a method for determining the vehicle B, any of the following methods 1 to 5 or a combination of the methods is considered.
1. The processor 21 obtains a list of UE (terminals) present in the same tracking area (TA) or having the same cell ID as the vehicle A from the base station 30 or the OAM system in the network 1. The base station 30 is capable of acquiring the electric-field intensity of radio waves from terminals located in an own cell as the sensing data (see <10> in FIG. 1) and providing the acquired electric-field intensity to the SF 2 (see <11> in FIG. 1).
2. The processor 21 accesses the AMF 11, and obtains a list of UE (terminals) present in the same tracking area (TA) or having the same cell ID as the vehicle A using a position information service offered by the AMF 11 (see <2> in FIG. 1).
3. The processor 21 accesses the NWDAF 13, and obtains a list of UE (terminals) entering an area shown by the same tracking area (TA) or having the same cell ID as the vehicle A and traveling at a speed close to that of the vehicle A using an analyzing function offered by the NWDAF 13 (see <2> in FIG. 1) .
4. The processor 21 accesses the UDM 12, and obtains a list of UE (terminals) of terminals (belonging to the same proximity communication group or the same application group) having the same group ID as the vehicle A using event information service offered by the UDM 12 (see <2> in FIG. 1).
5. The processor 21 accesses the GMLC/LMF 14, and obtains a list of UE (terminals) located at the same position, facing in the same direction, and traveling at the same speed as the vehicle B using position information service offered by the GMLC/LMF 14 (see <3> in FIG. 1).

In step S005, the processor 21 maps (compares) the list of candidates for the vehicle B with the distance, the direction, and the speed of the vehicle B determined from the sensing data to determine the vehicle B. Then, the processing proceeds to step S007.

When the processing proceeds to step S006, the processor 21 transfers the sensing data (image) received from the vehicle A to the external server 3 (second server) and acquires (receives) information on the vehicle B from the external server 3 (see <4> in FIG. 1).

In step S007, the processor 21 sends communication ID information (such as an SUPI, an IP address, and a MAC address) on the vehicle B included in, for example, the list of candidates for the vehicle B to the vehicle A (see <6> in FIG. 1).

FIG. 5 illustrates a processing example in the external server 3. In step S201, the processor 21 of the server device 20 operating as the external server 3 receives sensing data (image data) transferred from the SF 2.

In step S202, the processor 21 analyzes an image based on the image data, and extracts information on at least one of the shape, the color, the matters written on a license plate, and the type of the vehicle B.

In step S203, the processor 21 determines information on the vehicle B from vehicle information managed by the external server 3. In step S204, the processor 21 sends the information on the vehicle B to the SF 2. The information on the vehicle B includes communication ID information on the vehicle B.

FIG. 6 illustrates a processing example of the in-vehicle terminal 4A in the vehicle A. In step S101, the processor 41 of the in-vehicle terminal 4A detects an obstacle on a front side in its advancing direction, and makes a plan to change a lane.

In step S102, the processor 41 detects the presence of the vehicle B on a rear side in a change destination lane through sensing with the sensor group 51, and makes a plan to negotiate the change of the lane with the vehicle B.

In step S103, the processor 41 sends sensing data relating to the vehicle B to the network 1 (5GC), and requests the provision of communication ID information on the vehicle B.

In step S104, the processor 41 determines whether the communication ID information on the vehicle B has been received (acquired) from the network 1 (SF 2). The processing proceeds to step S105 when it is determined that the communication ID information has been acquired. Otherwise, the processing proceeds to step S107.

In step S105, the processor 41 communicates with the in-vehicle terminal 4B of the vehicle B using the communication ID information on the vehicle B, and notifies the vehicle B of a lane change request.

In step S106, the processor 41 receives a reply indicating the permission of the lane change of the vehicle A from the in-vehicle terminal 4B, and gives a control signal for assisting automatic driving with respect to the lane change to the automatic driving mechanism 52 when confirming the deceleration of the vehicle B using the sensor group 51. The automatic driving mechanism 52 operates according to the control signal to change the lane of the vehicle A. Thus, the vehicle A is enabled to properly avoid the parked vehicle D as illustrated in in FIG. 2.

In step S107, the processor 41 decreases the automatic driving level (automatic driving assistance level) of the host vehicle (vehicle A) (for example, from level 3 to level 2). Alternatively, the processor 41 temporarily suspends or interrupts the planned automatic lane change operation.

The SF 2 may only perform at least one of the determination of the vehicle B and the acquisition of the communication ID information thereof through the exchange of information with the NF (the AMF 11, the UDM 12, the NWDAF 13, the GMLC/LMF 14) in the network 1 and the determination of the vehicle B and the acquisition of the communication ID information thereof through the exchange of information with the external server 3. Further, the SF 2 may optionally acquire information from the base station 30. Further, a condition that the processor 41 selects the decrease in the level or the suspension of the operation described in step S107 is appropriately settable. The omission of one of the decrease in the level and the suspension of the operation is also possible. Further, in step S107, an operation planned by the vehicle A may be adjusted. That is, at least one of a timing at which the vehicle A performs the operation and the traveling speed of the vehicle A may be adjusted.

### Function and Effect of Embodiment

According to the embodiment, the server device 20 (information processing apparatus) operating as the SF 2 receives sensing data (first information) relating to the vehicle B (second vehicle) acquired using the sensor group 51 (sensor) from the in-vehicle terminal 4A (first in-vehicle terminal) installed in the vehicle A (first vehicle). The server device 20 specifies communication ID information (communication identification information) on the vehicle B (second vehicle) based on the sensing data (first information) and a list of terminals as candidates for the in-vehicle terminal 4B installed in the vehicle B (second information indicating the characteristics of surrounding vehicles present around the vehicle A (first vehicle)). Then, the server device 20 sends the communication ID information to the in-vehicle terminal 4A.

Further, the in-vehicle terminal 4A (first in-vehicle terminal) installed in the vehicle A (first vehicle) sends the sensing data (first information) relating to the vehicle B (second vehicle) acquired using the sensor group 51 (sensor). Further, when receiving the communication ID information on the vehicle B (second vehicle) from the server device 20 (information processing apparatus) operating as the SF 2 having received the sensing data (first information), the in-vehicle terminal 4A communicates with the in-vehicle terminal 4B (second in-vehicle terminal) installed in the vehicle B (second vehicle) using the communication ID information.

Accordingly, even if the communication ID information on the vehicle B is not clear when the vehicle A desires communication with the vehicle B, the vehicle A is enabled to suitably acquire the communication ID information corresponding to the vehicle B by sending the sensing data relating to the vehicle B to the network 1. Then, the in-vehicle terminal 4A of the vehicle A is enabled to properly perform an automatic driving operation including a lane change or the like through communication with the in-vehicle terminal 4B.

The above embodiment and the modified examples are given only as an example, and the present disclosure may be appropriately changed and performed without departing from its gist. Further, the processing or means described in the present disclosure may be freely combined together and performed unless any technological contradiction arises.

Further, the processing described as being performed by one device may be cooperatively performed by a plurality of devices. Alternatively, the processing described as being performed by different devices may be performed by one device. It is possible to flexibly change a hardware configuration (server configuration) to realize respective functions in a computer system.

The present disclosure is realizable in such a manner that a computer program implementing the functions described in the above embodiment is supplied to a computer, and that one or more processors provided in the computer read and perform the program. Such a computer program may be provided to a computer by a non-transitory computer-readable storage medium connectable to the system bus of the computer, or may be provided to the computer via a network. The non-transitory computer-readable storage medium includes, for example, any type of a disk such as a magnetic disk (such as a floppy (TM) disk and a hard disk drive (HDD)) and an optical disk (such as a CD-ROM, a DVD disk, and a Blue-ray disk), and any type of a medium for storing electronic instructions such as a read-only memory (ROM), a random access memory (RAM), an EPROM, an EEPROM, a magnetic card, a flash memory, and an optical card.

## Claims

1. An information processing method comprising:
receiving, by an information processing apparatus (20), first information relating to a second vehicle (B) acquired by using a sensor (51) from a first in-vehicle terminal (4A) installed in a first vehicle (A);
specifying, by the information processing apparatus (20), communication identification information on the second vehicle (B) based on the first information and second information indicating a characteristic of a surrounding vehicle present around the first vehicle (A); and
sending, by the information processing apparatus (20), the communication identification information to the first in-vehicle terminal (4A).

2. The information processing method according to claim 1, wherein the second information includes position information on the surrounding vehicle.

3. The information processing method according to claim 1 or 2, wherein the second information includes information on at least one of a shape, a type, a color, and matters written on a license plate of the surrounding vehicle.

4. The information processing method according to any of claims 1 to 3, wherein the receiving first information includes receiving the first information acquired by using the sensor (51) installed in the first vehicle (A).

5. The information processing method according to any of claims 1 to 3, wherein the receiving first information includes receiving the first information acquired by using a sensor provided in a transportation infrastructure used by the first vehicle (A).

6. The information processing method according to any of claims 1 to 5, wherein the specifying communication identification information on the second vehicle (B) includes specifying the communication identification information on the second vehicle (B) based on the first information, the second information, and third information acquired by a base station.

7. The information processing method according to any of claims 1 to 6, wherein the communication identification information on the second vehicle (B) is used by the first in-vehicle terminal to communicate with a second in-vehicle terminal installed in the second vehicle (B).

8. An information processing apparatus (20) comprising:
a controller configured to execute:
receive first information relating to a second vehicle (B) acquired by using a sensor from a first in-vehicle terminal installed in a first vehicle (A);
specify communication identification information on the second vehicle (B) based on the first information and second information indicating a characteristic of a surrounding vehicle present around the first vehicle (A); and
send the communication identification information to the in-vehicle terminal.

9. The information processing apparatus (20) according to claim 8, wherein the second information includes position information on the surrounding vehicle.

10. An information processing method executed by a first in-vehicle terminal (4A) included in a first vehicle (A), the method comprising:
sending first information relating to a second vehicle (B) acquired by using a sensor (51); and
when receiving communication identification information on the second vehicle (B) from an information processing apparatus (20) that has received the first information, communicating with a second in-vehicle terminal (4B) included in the second vehicle (B) using communication identification information.

11. The information processing method according to claim 10, further comprising specifying, by the first in-vehicle terminal (4A), the second vehicle (B) based on information indicating a surrounding area of the first vehicle (A).

12. The information processing method according to any of claims 10 to 11, wherein the first in-vehicle terminal (4A) performs adjusting of an operation planned for the first vehicle (A) through communication with the second in-vehicle terminal (4B).

13. The information processing method according to claim 12, wherein the adjusting of the operation includes at least one of adjusting a timing at which the first vehicle (A) performs an operation and adjusting a traveling speed of the first vehicle (A).

14. The information processing method according to any of claims 10 to 13, wherein the first in-vehicle terminal (4A) suspends or interrupts executing automatic driving assistance with respect to the first vehicle (A) when not receiving the communication identification information.

15. The information processing method according to any of claims 10 to 14, wherein the first in-vehicle terminal (4A) decreases an automatic driving assistance level with respect to the first vehicle (A) when not receiving the communication identification information.
